# EUROPEAN PATENT APPLICATION

(11) **EP 3 040 840 A1**
(43) Date of publication of application: **06.07.2016**
(21) Application number: 14840018.7
(22) Date of filing: 30.06.2014
(51) Int. Cl.: G06F 3/0488

(54) **INTERFACE PROCESSING METHOD, DEVICE, TERMINAL AND COMPUTER STORAGE MEDIUM**

(30) Priority: 29.08.2013 CN 201310385533
(71) Applicant: ZTE Corporation, Shenzhen, Guangdong 518057 (CN)
(72) Inventor: YAN, Mingsheng, Shenzhen Guangdong 518057 (CN)
(74) Representative: Tischner, Oliver
(86) International application number: PCT/CN2014/081145
(87) International publication number: WO 2015/027745

(57) **Abstract**

A method, device and terminal for processing an interface and a computer storage medium are provided. The method includes that: a compression instruction for compressing an interface is received; and the interface is compressed according to the compression instruction, wherein an effective triggering range for a control operation on the interface is determined according to the compression of the interface.

## Description

### TECHNICAL FIELD

The disclosure relates to the field of communications, and in particular to a method, device and terminal for processing an interface, and a computer storage medium.

### BACKGROUND

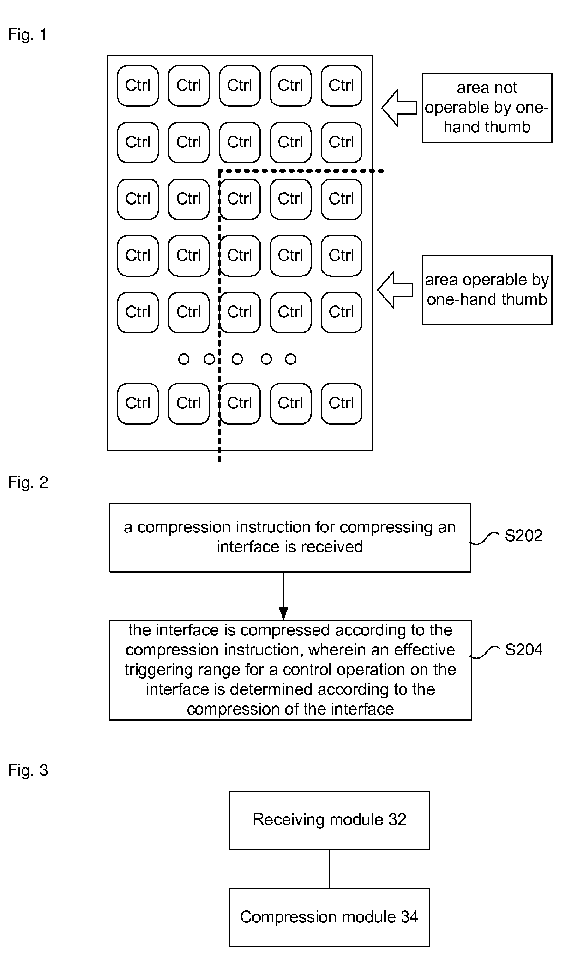

With the increased diversity of shapes of a mobile terminal, mobile terminals of various screen sizes emerge in endlessly. Recently, large-sized terminals (for example, mobile phones) become increasingly popular. A larger screen can contain more contents. All mobile phone manufacturers pay special attention to the research and development of large-sized mobile phones. However, improvements on software lag behind relatively. Mainly, the large-sized mobile phones bring inconvenience to users having a habit of one-hand operations, and the one-hand operations on the large-sized mobile phones will leave blind areas of fingers inevitably. Fig. 1 is a diagram of a one-hand thumb blind area for a large-screen mobile phone in the relevant art. As shown in Fig. 1, right-hand operations are taken as an example. One-hand thumb operable areas are only a part of areas at a lower right corner, there are a huge part of one-hand thumb inoperable areas, double-hand operations have to be executed under some conditions, and therefore the convenience in interaction between a user and a mobile phone is directly affected, which is one of the factors affecting the user experience in large-screen and huge-screen mobile phones.

Consequently, there are problems in the relevant art that a large-screen terminal or a huge-screen terminal cannot be operated by one hand and the user experience is affected.

### SUMMARY

The embodiments of the disclosure provide a method, device and a terminal for processing an interface, and a computer storage medium, which are intended to solve the technical problems which exist currently.

According to one aspect of embodiments of the disclosure, a method for processing an interface is provided, which may include that: a compression instruction for compressing an interface is received; and the interface is compressed according to the compression instruction, wherein an effective triggering range for a control operation on the interface is determined according to the compression of the interface.

In the above-mentioned solution, the compression instruction may be a gesture. After the gesture for compressing the interface is received, the method may further include that: the received gesture is recognised; and when it is determined that the gesture is matched with a pre-determined compression gesture, the compression of the interface is determined.

In the above-mentioned solution, the compression instruction may be a gesture. The step that the interface is compressed according to the compression instruction may include that: a gesture compression value is obtained according to the gesture; and when it is determined that the gesture compression value exceeds a compression threshold value, the compressed interface is re-arranged.

In the above-mentioned solution, the step that the compressed interface is re-arranged may include that: a layout algorithm for re-arranging the compressed interface is determined; and the compressed interface is re-arranged according to the layout algorithm.

In the above-mentioned solution, the layout algorithm may include at least one of the following algorithms: a position priority algorithm and a pre-set weight priority algorithm.

In the above-mentioned solution, after the interface is compressed according to the compression instruction, the method may further include that: the compressed interface is recovered by at least one of following ways that a recovery gesture for recovering the compressed interface is received, and compression time reaches a pre-determined time length.

According to another aspect of embodiments of the disclosure, a device for processing an interface is provided, which may include: a receiving module, configured to receive a compression instruction for compressing an interface; and a compression module, configured to compress the interface according to the compression instruction, wherein an effective triggering range for a control operation on the interface is determined according to the compression of the interface.

In the above-mentioned solution, the compression instruction may be a gesture. The receiving module may include: a recognition unit, configured to recognise the received gesture; a first judgment unit, configured to judge whether the gesture is matched with a pre-determined compression gesture; and a determination unit, configured to determine to compress the interface when determining that the gesture is matched with the pre-determined compression gesture.

In the above-mentioned solution, the compression instruction may be a gesture. The compression module may include: an obtaining unit, configured to obtain a gesture compression value according to the gesture; a second judgment unit, configured to judge whether the gesture compression value exceeds a compression threshold value; and an arrangement unit, configured to re-arrange the compressed interface when determining that the gesture compression value exceeds the compression threshold value.

In the above-mentioned solution, the arrangement unit may include: a determination sub-unit, configured to determine a layout algorithm for re-arranging the compressed interface; and an arrangement sub-unit, configured to re-arrange the compressed interface according to the layout algorithm.

In the above-mentioned solution, the interface processing device may further include: a recovery module, configured to recover the compressed interface by at least one of following ways that a recovery gesture for recovering the compressed interface is received, and compression time reaches a pre-determined time length.

According to yet another aspect of embodiments of the disclosure, a terminal is provided, which may include the device mentioned above.

According to still another aspect of embodiments of the disclosure, a computer storage medium is provided, which may include a set of instructions, when the instructions are executed, causing at least one processor to execute the method for processing an interface as mentioned above.

By means of the embodiments of the disclosure, a compression instruction for compressing an interface is received; and the interface is compressed according to the compression instruction, wherein an effective triggering range for a control operation on the interface is determined according to the compression of the interface. The problems in the relevant art that a large-screen terminal or a huge-screen terminal cannot be operated by one hand and the user experience is affected are solved, and the interface of the large-screen terminal or the huge-screen terminal can be compressed via a gesture, thereby making it possible to operate the large-screen terminal or the huge-screen terminal by one hand and better improving the user experience.

### BRIEF DESCRIPTION OF THE DRAWINGS

The drawings described here are intended to provide further understanding of the disclosure, and form a part of the disclosure. The schematic embodiments and descriptions of the disclosure are intended to explain the disclosure, and do not form improper limits to the disclosure. In the drawings:
Fig. 1 is a diagram of a one-hand thumb blind area for a large-screen mobile phone in the relevant art;
Fig. 2 is a flowchart of a method for processing an interface according to an embodiment of the disclosure;
Fig. 3 is a structure block diagram of a device for processing an interface according to an embodiment of the disclosure;
Fig. 4 is a structure block diagram of a receiving module in a device for processing an interface according to an embodiment of the disclosure;
Fig. 5 is a structure block diagram of a compression module in a device for processing an interface according to an embodiment of the disclosure;
Fig. 6 is a structure block diagram of an arrangement unit in a compression module in a device for processing an interface according to an embodiment of the disclosure;
Fig. 7 is a structure block diagram of another device for processing an interface according to an embodiment of the disclosure;
Fig. 8 is a diagram of a main menu for interface compression and re-layout via a gesture according to an embodiment of the disclosure;
Fig. 9 is a diagram of a common interface for interface compression and re-layout via a gesture according to an embodiment of the disclosure;
Fig. 10 is a diagram of a compression recovery gesture according to an embodiment of the disclosure; and
Fig. 11 is a flowchart of a method for interface compression and re-layout according to an embodiment of the disclosure.

### DETAILED DESCRIPTION

The disclosure is described below with reference to the drawings and the embodiments in detail. It is to be noted that the embodiments of the disclosure and the characteristics in the embodiments can be combined if there is no conflict.

According to an embodiment, a method for processing an interface is provided. Fig. 2 is a flowchart of a method for processing an interface according to an embodiment of the disclosure. As shown in Fig. 2, the flow includes the steps as follows.
Step S202: A compression instruction for compressing an interface is received.
Step S204: The interface is compressed according to the compression instruction, wherein an effective triggering range for a control operation on the interface is determined according to the compression of the interface.

By means of the steps, the interface is processed via the received compression instruction, wherein the effective triggering range for the control operation on the interface is determined according to the compression of the interface. The triggering range is a range for triggering a control on the interface, namely a position of the control on the compressed interface. The effectiveness of the control operation on the interface refers to that: an attribute of the control after compression is still effective, namely a user can still normally operate and use the control. In the relevant art, an inoperable area of the large-screen terminal or the huge-screen terminal cannot be operated or is needed to be completed by both hands, the operation is not simple or convenient, and the user experience is affected. Compared with the prior art, the embodiments of the disclosure have the advantages that the interface is compressed using the compression instruction, thereby solving the problems in the relevant art that a large-screen terminal or a huge-screen terminal cannot be operated by one hand and the user experience is affected, and achieving the effects of compressing the interface of the large-screen terminal or the huge-screen terminal via the gesture, making it possible to operate the large-screen terminal or the huge-screen terminal by one hand and better improving the user experience.

Under the condition that the compression instruction is a gesture, after the gesture for compressing the interface is received, processing modes can be adopted as follows. Firstly, the received gesture is recognised. It is judged whether the obtained gesture is matched with a pre-determined compression gesture, namely before the interface is compressed via the obtained gesture, various gestures are pre-defined, and operation functions of various gestures are defined. When gesture matching is performed, a relatively reasonable matching degree can be set. When the obtained gesture and the pre-determined gesture achieve the matching degree, it is determined that the gesture is used for executing functions executed by the pre-determined gesture. Under the condition that a judgment result is YES, namely the gesture is matched with the pre-determined compression gesture, it is determined to compress the interface. By means of the processing modes, the user operation is simple and convenient.

In one embodiment, under the condition that the compression instruction is a gesture, when the interface is compressed according to the compression instruction, corresponding compression extents of different sizes can be executed according to the magnitude of an operation degree of the gesture. For example, when the operation degree of the gesture is relatively small, the interface is only compressed to a small extent, and when the operation degree is further increased, the compression extent of the interface will be further increased. When the operation degree is increased to a certain extent, the compression of the interface might cause different layouts. In one embodiment, processing modes can be adopted as follows. A gesture compression value is defined for the operation degree of the gesture, and the gesture compression value is obtained according to the gesture. Then, it is judged whether the obtained gesture compression value exceeds a compression threshold value. Under the condition that a judgment result is the obtained gesture compression value exceeds the compression threshold value, the compressed interface is re-arranged. By means of the processing modes, obvious changes caused in an interface compression process are quantified.

Here, the step that the compressed interface is re-arranged can include that: firstly, a layout algorithm for re-arranging the compressed interface is determined; and the compressed interface is re-arranged according to the determined layout algorithm. It is to be noted that the layout algorithm can include at least one of the following algorithms: a position priority algorithm and a pre-set weight priority algorithm, wherein the position priority algorithm is used for setting a display sequence of interface positions in the layout of an original interface; and the pre-set weight priority algorithm is used for displaying according to importance degree or priority of each control in the original interface. For example, important controls can be controls which are more frequently used.

In one embodiment, after the interface is compressed according to the received compression instruction, when it is necessary to compress the interface, the interface can be recovered. For example, the compressed interface can be recovered by at least one of following ways: a recovery gesture for recovering the compressed interface is received, wherein the recovery gesture can be set according to the processing modes of the compression gesture; and compression time reaches a pre-determined time length, namely after the interface is compressed, a timer is set to measure compression time of the interface, and when the measured time reaches the pre-determined time length, the interface is automatically recovered to the interface before compression.

According to an embodiment, a device for processing an interface is provided. The device is configured to realize the above-mentioned embodiment and a preferred implementation mode, and those which have been described are no longer described in detail. The term 'module', as used below, can implement the combination of software and/or hardware with predetermined functions. Although the device described by the following embodiment can be realized by software, hardware or the combination of software and hardware may also be constructed for implementing the device.

Fig. 3 is a structure block diagram of a device for processing an interface according to an embodiment of the disclosure. As shown in Fig. 3, the device includes: a receiving module 32 and a compression module 34, and all the modules are described below in detail.

The receiving module 32 is configured to receive a compression instruction for compressing an interface; and the compression module 34 is connected to the receiving module 32 and is configured to compress the interface according to the compression instruction, wherein an effective triggering range for a control operation on the interface is determined according to the compression of the interface.

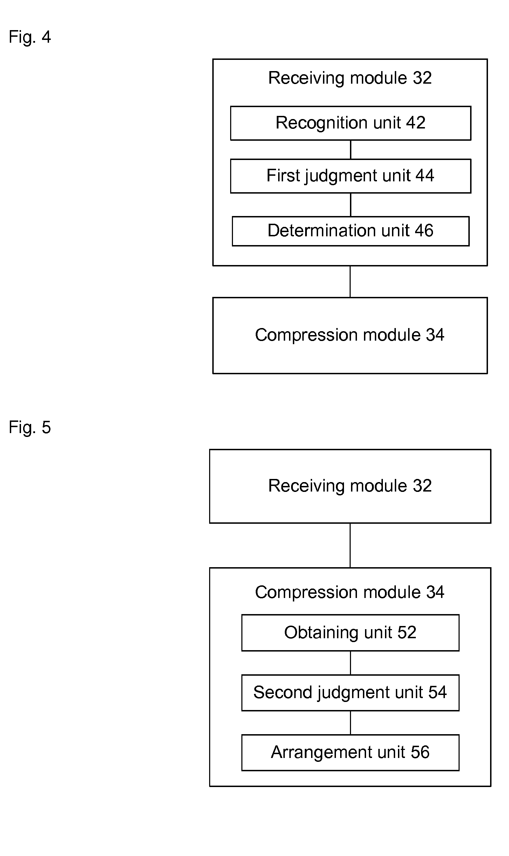

Fig. 4 is a structure block diagram of a receiving module in an interface processing device according to an embodiment of the disclosure. As shown in Fig. 4, the receiving module 32 includes a recognition unit 42, a first judgment unit 44 and a determination unit 46, and all the units are described below in detail.

The recognition unit 42 is configured to recognise the received gesture; the first judgment unit 44 is connected to the recognition unit 42 and is configured to judge whether the received gesture is matched with a pre-determined compression gesture; and the determination unit 46 is connected to the first judgment unit 44 and is configured to determine to compress the interface under the condition that a judgment result is the two gestures are matched.

Fig. 5 is a structure block diagram of a compression module in a device for processing an interface according to an embodiment of the disclosure. As shown in Fig. 5, the compression module 34 includes: an obtaining unit 52, a second judgment unit 54 and an arrangement unit 56, and all the units are described below in detail.

The obtaining unit 52 is configured to obtain a gesture compression value according to the received gesture; the second judgment unit 54 is connected to the obtaining unit 52 and is configured to judge whether the gesture compression value exceeds a compression threshold value; and the arrangement unit 56 is connected to the second judgment unit 54 and is configured to re-arrange the compressed interface under the condition that a judgment result is the gesture compression value exceeds the compression threshold value.

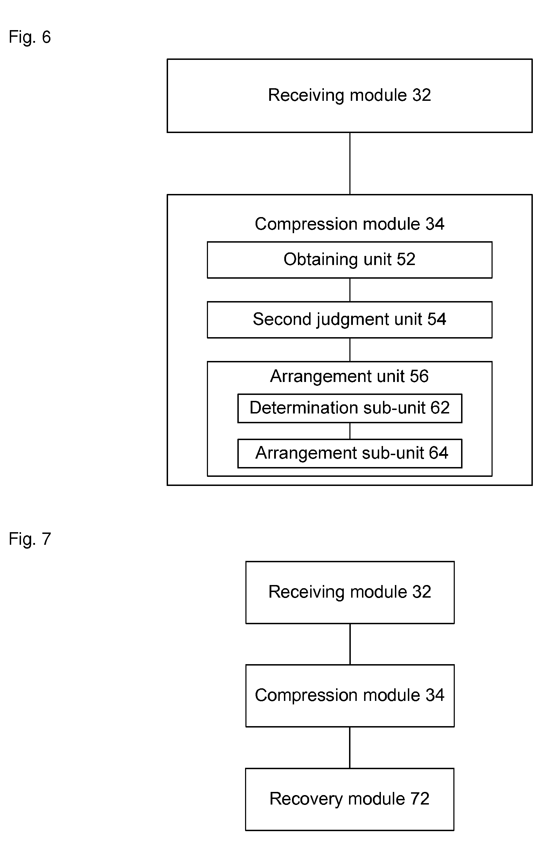

Fig. 6 is a structure block diagram of an arrangement unit in a compression module in a device for processing an interface according to an embodiment of the disclosure. As shown in Fig. 6, the arrangement unit 56 includes: a determination sub-unit 62 and an arrangement sub-unit 64, and all the units are described below in detail.

The determination sub-unit 62 is configured to determine a layout algorithm for re-arranging the compressed interface; and the arrangement sub-unit 64 is connected to the determination sub-unit 62 and is configured to re-arrange the compressed interface according to the determined layout algorithm.

Fig. 7 is a structure block diagram of another device for processing an interface according to an embodiment of the disclosure. As shown in Fig. 7, the interface processing device further includes a recovery module 72, and the recovery module is described below in detail.

The recovery module 72 is configured to recover the compressed interface by at least one of following ways: a recovery gesture for recovering the compressed interface is received, and compression time reaches a pre-determined time length.

During practical application, the recognition unit can be implemented by a Central Processing Unit (CPU), a Digital Signal Processor (DSP) or a Field-Programmable Gate Array (FPGA) in the interface processing device, combined with a receiver; and the first judgment unit, the determination unit, the obtaining unit, the second judgment unit, the determination sub-unit, the arrangement sub-unit and the recovery module can be realized by the CPU, the DSP or the FPGA in the interface processing device.

By means of the above-mentioned embodiments, the problem that one-hand operation cannot be realized in an interface operation process when a user uses a large-screen mobile phone or a huge-screen mobile phone is solved, the user can conveniently operate the interface by one hand, the feasibility of the one-hand operation of the large-screen mobile phone is realized, and therefore the experience quality of the user who uses the large-screen mobile phone is improved.

In the relevant art, the combination of an interaction between each user interaction interface on the mobile phone and the user is mainly embodied by screen switching via left-right (or up-down) gesture sliding, long-press, one-click, or double-click. Before the large-screen mobile phone emerges, a one-hand thumb can totally cover the screen of the mobile phone, and a user operation interface is convenient and rapid. On the large-screen mobile phone, a common user cannot conveniently operate all areas, particularly an upper left corner (an opposite corner for a left-hand operation user), on the operation interface by one hand. Based on the relevant art, a mobile terminal has defects in user experience in a functional interaction between the large-screen mobile phone and the huge-screen mobile phone. In order to solve the problem that one-hand operation cannot be realized in the interface operation process currently, due to the fact that gesture operations are supported on conventional mainstream platforms such as android and ios, the design of the interface and the zooming, movement and re-layout of the controls can be realized by platform software. In the embodiment, a method for realizing menu zooming on a mobile terminal via a gesture is proposed. With reference to a gesture-based interface zooming method and a layout adjustment, the convenience of the operation interface of the large-screen mobile phone can be greatly improved.

The method for realizing menu zooming on a mobile terminal via a gesture includes the steps as follows.
Step A: A user goes into an operation interface.
Step B: The user makes an interface compression gesture on a mobile phone interface.
Step C: A terminal obtains and recognises the interface compression gesture.
Step D: The terminal compresses a layout on the interface.
Step E: The user continuously makes the interface compression gesture on the mobile phone interface.
Step F: The terminal judges whether a compression threshold value is exceeded, and if the compression threshold value is exceeded, the layout on the interface is re-set.
Step G: The user makes an interface recovery gesture on the mobile phone interface.
Step H: The terminal obtains and recognises the interface recovery gesture.
Step I: The terminal recovers the layout on the interface to an original interface.

By means of the above-mentioned embodiment, gesture operations are added to the operation interface to compress the interface, the layout is re-set after the interface is compressed to a certain proportional threshold value, the user can conveniently operate the interface by one hand accordingly, and therefore the feasibility of the one-hand operation of the large-screen mobile phone is realized. Thus, the experience quality of the user who uses the large-screen mobile phone is improved.

The disclosure is described below with reference to a compression processing result.

In the method for realizing menu zooming on a mobile terminal via a gesture, components thereof include: a message obtaining module configured as a message interaction module to process a zooming gesture; a gesture capturing and distribution processing module which is a module for an interface Launcher/APP-to-gesture response; and in addition, a compression gesture and a recovery gesture are also defined.

The re-layout of the interface includes a certain algorithm. After the re-layout, part of controls is located in an invisible area of a screen or other switched screen. In a re-layout reference algorithm such as a position priority algorithm, a y axis is taken as high priority, controls at the upper part of the y axis are located in a display area preferentially during re-arrangement with respect to controls at the lower part of the y axis, controls at the same position of the y axis can be arranged according to the priority of an x axis, and controls at left positions of the x axis are located in a display area preferentially during re-arrangement with respect to controls at right positions of the x axis. In addition, lowest priority can be set. Controls with the lowest priority are located in a non-display area preferentially during re-arrangement. An attribute representing whether re-arrangement is displayed can be added to each control as needed. If the attribute is set to represent that re-arrangement is not displayed, the control is hidden under a re-set layout.

It is to be noted that the above-mentioned large-screen mobile phone does not have a definite meaning. The method is platform-based. The realization of the method is not limited by specific device hardware.

The gesture capturing and distribution processing module is a uniform mechanism provided by a mobile phone software development platform. Different gestures of a user are recognised, specifications are uniformly defined, an obtained gesture is spread via a message registration and distribution mechanism, a call-back mechanism or other mechanisms of a system, and generally, this gesture will be obtained by a currently activated interface.

The gesture response module is configured to perform a processing flow for pre-defining various gestures notified by the system for a specific interface. After a gesture notification is received, a current gesture is compared with a processable pre-defined gesture. When there is a processing interface for a specific gesture, a response is given to this gesture, otherwise, the gesture is directly abandoned. If the gesture reception is not registered to a system, the gesture notification will not be obtained directly.

The above-mentioned priority algorithm for control arrangement is only one of re-arrangement realizing algorithms, and the realization of interface compression and arrangement includes, but not limited to, this fixed algorithm.

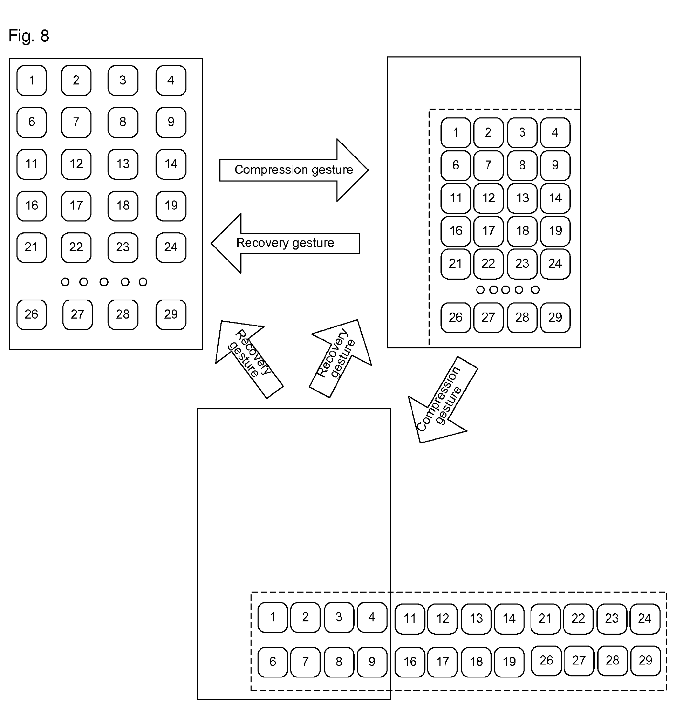

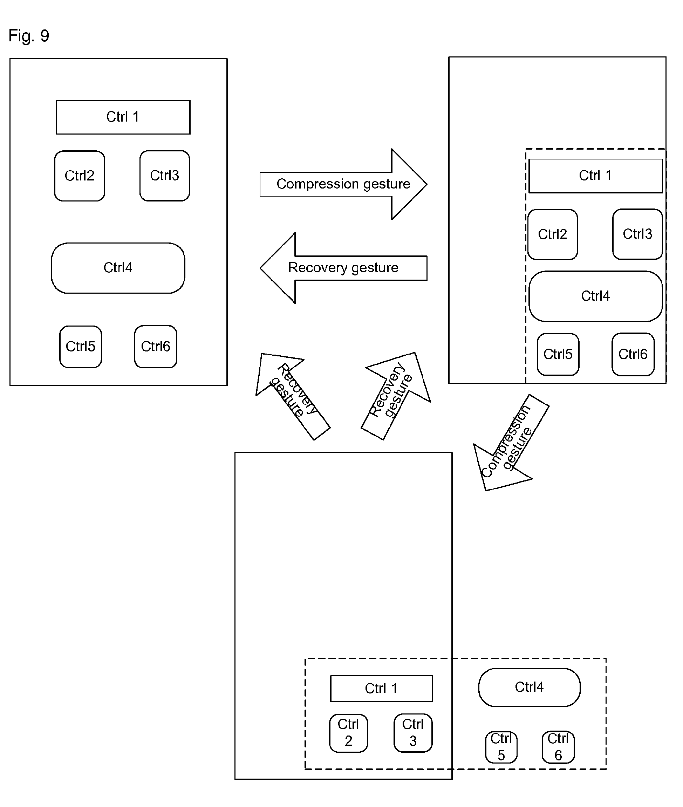

Fig. 8 is a diagram of a main menu for interface compression and re-layout via a gesture according to an embodiment of the disclosure. Fig. 9 is a diagram of a common interface for interface compression and re-layout via a gesture according to an embodiment of the disclosure. A compression position includes, but not limited to, interface compression shown in Fig. 8 and Fig. 9. For example, a compression and re-layout position can be set as a lower left corner for a left-hand user, or can be set as an under side (namely compression and arrangement are performed in only a vertical direction) for a narrow-long type screen.

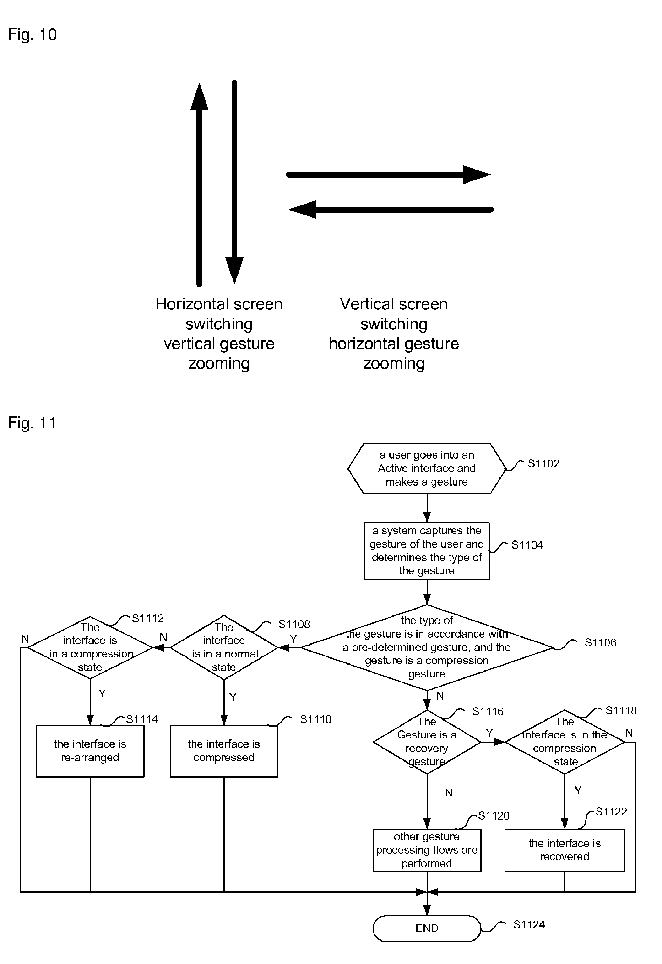

Fig. 10 is a diagram of a compression recovery gesture according to an embodiment of the disclosure. As shown in Fig. 10, the compression recovery gesture includes horizontal screen switching vertical gesture zooming and vertical screen switching horizontal gesture zooming, and a definition mode includes, but not limited to, this. It is to be noted that the gesture may be a double-finger zooming gesture or the like. All gestures which are supported to be captured by the system can be used for triggering interface compression and recovery.

Here, an interface recovery gesture includes, but not limited to, a unique way of interface recovery. The interface can be designed to be recovered in timeout, namely after the user compresses a menu interface, if there is no action within a period of time, the interface will be automatically recovered after a time threshold value is exceeded.

In addition, the interface re-layout serves as a supplement of interface compression, and does not serve as a necessary processing step after interface compression. The compression step and the re-layout step mentioned in the embodiment above are used for better understanding. During design, interface compression and re-layout can be synchronously performed. Moreover, the interface can be recovered from a half-compression state or a state after the layout, and policy selection can be performed by a software developer.

Fig. 11 is a flowchart of a method for interface compression and re-layout according to an embodiment of the disclosure. As shown in Fig. 11, the flow includes the steps as follows.
Step S1102: A user runs a terminal to go into an interface (namely an Active interface) which supports compression and re-layout gestures, and the user makes a gesture (the interface is designed to have the characteristic of an ability to obtain the gesture during design).
Step S1104: A terminal system captures the gesture of the user, transfers a message to the interface according to the gesture, or directly calls a call-back of the interface.
Step S1106: It is judged whether the gesture is a compression gesture, Step S1108 is executed if a judgment result is the gesture is a compression gesture, otherwise, Step S1116 is executed, namely the interface determines the type of the gesture, and then a call-back interface is directly called for the call-back.
Step S1108: If the type of the gesture is in accordance with a pre-determined gesture, the gesture belongs to normal compression gestures, it is judged whether a current interface state is a normal state or a compression state, if the current interface state is the normal state, Step S1110 is executed, and otherwise, Step S1112 is executed.
Step S1110: The interface is in the normal state, and the interface is compressed due to the fact that a current gesture is the compression gesture.
Step S1112: It is judged whether the interface is in the compression state, Step S1114 is executed under the condition that a judgment result is the interface is in the compression state, and otherwise, Step S1124 is executed.
Step S1114: The interface is re-arranged, and if a gesture is an amplification gesture, no action is performed.
Step S1116: The interface is in the compression state or a re-arranged state, it is judged whether a current gesture is a recovery gesture, Step S1118 is executed under the condition that a judgment result is the current gesture is a recovery gesture, and otherwise, Step S1120 is executed.
Step S1118: It is judged whether the interface is in the compression state currently, Step S1122 is executed under the condition that a judgment result is the interface is in the compression state, and otherwise, Step S1124 is executed.
Step S1120: Other gesture processing flows are performed.
Step S1122: If the interface is in the compression state currently and a current gesture is the recovery gesture, a menu is recovered, and if the current gesture is the compression gesture, no action is performed.
Step S1124: END.

There are varied software designs considered for user convenience operations on bigger and bigger screens of mobile terminals in the relevant art. Scenes affecting the user experience are universalised. An interface compression and re-layout mode is realized based on a platform gesture response mechanism, thereby thoroughly solving the problem of low convenience in one-hand operation, serving as one of most common operations, on the menu interface in the user experience for the large-screen mobile phone. The user cannot be troubled by a situation that an application cannot be opened by one-hand operation on the menu interface of the large-screen mobile phone, and the fluency of the user experience is greatly improved.

Obviously, those skilled in the art should understand that all modules or all steps in the embodiments of the disclosure can be realized using a generic computation apparatus, can be centralized on a single computation apparatus or can be distributed on a network composed of a plurality of computation apparatuses. Optionally, they can be realized using executable program codes of the computation apparatuses. Thus, they can be stored in a storage apparatus and executed by the computation apparatuses, the illustrated or described steps can be executed in a sequence different from this sequence under certain conditions, or they are manufactured into each integrated circuit module respectively, or a plurality of modules or steps therein are manufactured into a single integrated circuit module. Thus, the disclosure is not limited to a combination of any specific hardware and software.

Moreover, a computer program product implemented on one or more computer available storage media (including, but not limited to, a disk memory, an optical memory and the like) containing computer available program codes can be adopted in the disclosure.

The disclosure is described with reference to flowcharts and/or block diagrams of a method, a device (system) and the computer program product according to the embodiments of the disclosure. It should be understood that each flow and/or block in the flowcharts and/or the block diagrams and a combination of the flows and/or the blocks in the flowcharts and/or the block diagrams can be realized by computer program instructions. These computer program instructions can be provided for a general computer, a dedicated computer, an embedded processor or processors of other programmable data processing devices to generate a machine, so that an apparatus for realizing functions assigned in one or more flows of the flowcharts and/or one or more blocks of the block diagrams is generated via instructions executed by the computers or the processors of the other programmable data processing devices.

These computer program instructions can also be stored in a computer readable memory capable of guiding the computers or the other programmable data processing devices to work in a specific mode, so that a manufactured product including an instruction apparatus is generated via the instructions stored in the computer readable memory, and the instruction apparatus realizes the functions assigned in one or more flows of the flowcharts and/or one or more blocks of the block diagrams.

These computer program instructions can also be loaded to the computers or the other programmable data processing devices, so that processing realized by the computers is generated by executing a series of operation steps on the computers or the other programmable devices, and therefore the instructions executed on the computers or the other programmable devices provide a step of realizing the functions assigned in one or more flows of the flowcharts and/or one or more blocks of the block diagrams.

The above is only the preferred embodiments of the disclosure, and is not intended to limit the disclosure. There can be various modifications and variations in the disclosure for those skilled in the art. Any modifications, equivalent replacements, improvements and the like within the spirit and principle of the disclosure shall fall within the protection scope of the disclosure.

## Claims

1. A method for processing an interface, comprising:
receiving a compression instruction for compressing an interface; and
compressing the interface according to the compression instruction, wherein an effective triggering range for a control operation on the interface is determined according to the compression of the interface.

2. The method according to claim 1, wherein the compression instruction is a gesture, and after the gesture for compressing the interface is received, the method further comprises:
recognising the received gesture; and
determining to compress the interface when determining that the gesture is matched with a pre-determined compression gesture.

3. The method according to claim 1, wherein the compression instruction is a gesture, and compressing the interface according to the compression instruction comprises:
obtaining a gesture compression value according to the gesture; and
re-arranging the compressed interface when determining that the gesture compression value exceeds a compression threshold value.

4. The method according to claim 3, wherein re-arranging the compressed interface comprises:
determining a layout algorithm for re-arranging the compressed interface; and
re-arranging the compressed interface according to the layout algorithm.

5. The method according to claim 4, wherein the layout algorithm comprises at least one of following algorithms:
a position priority algorithm and a pre-set weight priority algorithm.

6. The method according to claim 1, wherein after the interface is compressed according to the compression instruction, the method further comprises:
recovering the compressed interface by at least one of following ways:
receiving a recovery gesture for recovering the compressed interface, and
making compression time reach a pre-determined time length.

7. A device for processing an interface, comprising:
a receiving module, configured to receive a compression instruction for compressing an interface; and
a compression module, configured to compress the interface according to the compression instruction, wherein an effective triggering range for a control operation on the interface is determined according to the compression of the interface.

8. The device according to claim 7, wherein the compression instruction is a gesture, and the receiving module comprises:
a recognition unit, configured to recognise the received gesture;
a first judgment unit, configured to judge whether the gesture is matched with a pre-determined compression gesture; and
a determination unit, configured to determine to compress the interface when determining that the gesture is matched with the pre-determined compression gesture.

9. The device according to claim 7, wherein the compression instruction is a gesture, and the compression module comprises:
an obtaining unit, configured to obtain a gesture compression value according to the gesture;
a second judgment unit, configured to judge whether the gesture compression value exceeds a compression threshold value; and
an arrangement unit, configured to re-arrange the compressed interface when determining that the gesture compression value exceeds the compression threshold value.

10. The device according to claim 9, wherein the arrangement unit comprises:
a determination sub-unit, configured to determine a layout algorithm for re-arranging the compressed interface; and
an arrangement sub-unit, configured to re-arrange the compressed interface according to the layout algorithm.

11. The device according to claim 7, further comprising:
a recovery module, configured to recover the compressed interface by at least one of following ways: a recovery gesture for recovering the compressed interface is received, and compression time reaches a pre-determined time length.

12. A terminal, comprising the device according to any one of claims 7 to 11.

13. A computer storage medium, comprising a set of instructions, when the instructions are executed, causing at least one processor to execute the method for processing an interface according to any one of claims 1 to 6.
